# EUROPEAN PATENT SPECIFICATION

(11) **EP 3 480 103 B1**
(45) Date of publication and mention of the grant of the patent: **18.08.2021**
(21) Application number: 18204337.2
(22) Date of filing: 05.11.2018
(51) Int. Cl.: B62M 6/50, B62M 6/55, G01L 3/10

(54) **CRANK DRIVE MOTOR ASSEMBLY FOR ELECTRIC BICYCLE**
KURBELANTRIEBSMOTORANORDNUNG FÜR ELEKTRISCHES FAHRRAD
ENSEMBLE MOTEUR D'ENTRAÎNEMENT À MANIVELLE POUR BICYCLETTE ÉLECTRIQUE

(30) Priority: 06.11.2017 IT 201700125860
(43) Date of publication of application: 08.05.2019
(73) Proprietor: ASKOLL EVA S.P.A., 36031 Dueville (VI) (IT)
(72) Inventor: MARIONI, Elio, 36031 Dueville (VI) (IT)
(74) Representative: Antonucci, Emanuele

(56) References cited:
- EP-A1- 2 216 242
- EP-A1- 3 088 289
- EP-A2- 0 765 804
- JP-A- 2014 198 505
- US-A1- 2015 038 289
- US-A1- 2017 152 002

## Description

### Field of application

The present invention relates to a crank drive motor assembly for a pedal-assisted electric bicycle, where "crank drive motor" is understood as meaning a motor operating the shaft which carries the front sprocket or front sprocket set and which is therefore mounted instead of the conventional bottom bracket of the bicycle.

The invention also relates to an electric or pedal-assisted bicycle comprising a crank drive motor assembly.

The invention finds a useful application in the technological sector of electrical mobility.

### Prior art

As is well known, for many years now, owing to a greater sensitivity in environmental matters and the consequent technological improvements in the sector, the use of electric bicycles has increased considerably.

It is emphasized that in electric bicycles an electric motor is generally used as an aid and not as a substitute for the pedalling action. In fact, more correctly one refers to a "pedal-assisted bicycle" which is a bicycle where the propulsive muscle action is assisted - in a specific manner determined by an electronic control unit - by that of an electric motor.

During a first stage of their technological development, said electric bicycles were mostly equipped with motors integrated in one of the hubs of the vehicle. This technical solution has, on the one hand, the advantage of limiting the mechanical complexity of the device and the respective production costs as well as facilitating the conversion of conventional bicycles into electric bicycles.

On the hand, it is clear that such a design solution imposes major constraints in terms of the weight and size of the motor unit. The necessarily small dimensions of the electric motor and the transmission limit the power which is output and, even more so, the torque supplied to the user.

Moreover, the hub motor results in unbalanced loads on the bicycle, thus adversely affecting the manoeuvrability and the stability of the vehicle.

The aforementioned drawbacks therefore limit the use of a hub motor electric bicycle to given applications and market sectors: for example, it is totally inadequate for off-road applications.

In view of the recent commercial and technological boom in the sector the alternative design solution of a crank drive motor has therefore gained importance, this solution, while involving a greater complexity of the device and higher production cost, ensuring however a significantly better performance.

The crank drive motor, unlike the hub motor, is rigidly supported by the frame at the intersection between the seat tube and the down tube and operates directly in the region of the bottom bracket, i.e. on the pedal crank axis. This motor may therefore have relatively large dimensions and is located in a middle position below the centre of gravity of the vehicle.

The actual electric motor is integrated in a motor assembly which generally also comprises part of the electronic interface and in particular the reduction gear which demultiplies the speed at the front sprocket.

The crank drive motors which to date are present on the market, while substantially meeting the requirements of the sector, could nevertheless be further improved and innovated.

One main aspect is that of limiting the dimensions which often results in technical compromises which are determined in particular by the need to ensure that the interaxial distance between the pedals (so-called "O.L.D." = "over-locknut distance") complies with the standards laid down in the sector.

Also the reduction of costs, in a technological niche sector where not all the solutions have been optimized yet, represents one of the main objectives.

In relation to these two aspects it must be emphasized how, besides the merely mechanical/kinematical functions, crank drive motors preferably implement sophisticated-enough electronic functions suitable for a high-level product range. Thus for example at the motor assembly devices for detecting the torque and the pedalling speed are generally present, which are processed by the control electronics to ensure a regular and satisfactory device operation. Those detection devices have though relatively great sizes and/or manufacturing costs.

Another aspect which may be improved is the compactness and the compatibility of the bicycle drive system comprising both the crank drive motor and the battery and the various apparatus for interfacing with the user (on-board computer) and with the mechanical devices of the vehicle (such as the derailleurs).

Crank drive motor assemblies according to the prior art are disclosed in documents EP 0 765 804 A2, which shows the features of the preamble of claim 1, JP 2014/198505 A and US 2015/038289 A1.

In this connection, bicycles with a crank drive motor generally require an ad hoc design, where the various parts must be specifically designed for the electronic control needed to achieve a high-efficiency motorized action.

The technical problem of the present invention is to device a crank drive motor assembly for an electric bicycle, having improved characteristics of the existing devices, and in particular having a functionally compact configuration and low manufacturing costs.

### Summary of the invention

The aforementioned technical problem is solved by a motor assembly for an electric bicycle as described in claim 1 as well as an electric bicycle comprising such a device as described in claim 8.

As a person skilled in the art will have the opportunity to appreciate, in the motor assembly according to the invention the torsiometer function is advantageously made by an intermediate portion of the sleeve body which transmits the traction to the front sprocket, defining a structure with an optimized size and reduced production costs.

The strain gauges employed to measure the torsional deformation are preferably two, in order to obtain a temperature compensation.

Other particularly advantageous aspects of the present invention are presented in the dependent claims 2-7.

In particular, the shape as a single piece of the sleeve which composes the drive shaft is pointed out, wherein the only pieces which require a heat-hardening treatment (the external backing ring of the freewheel and the toothed output gear of the transmission) are made separately and applied. The possibility to machine the sleeve body advantageously results therefrom, without having to take into consideration heat treatments of the piece.

In particular, the possibility to make the external backing ring of the freewheel like an externally-threaded ring nut is emphasized, to be tightened in a suitable threaded seat obtained at the front end of the drive shaft - at the third portion defined in the main claim.

As regards the toothed output gear of the transmission, it can be advantageously screwed on a flange, preferably lobed, obtained as a single piece on the sleeve of the drive shaft.

The particular position of the encoder wheel, preferably of the magnetic type, is also pointed out, located in axial alignment with respect to the receiving electronic board, which allows the use - unknown in the sector of the invention - of low-cost sensors such as TMR sensors for signal detection.

Further characteristic features and advantages of the present invention will emerge from the description, provided hereinbelow, of a preferred example of embodiment provided by way of a non-limiting example with reference to the accompanying drawings.

### Brief description of the drawings

Figure 1 shows a side view of the motor assembly according to the present invention;
Figure 2 shows a view, from above, of the motor assembly according to the present invention, with associated crankset;
Figure 3 shows a side view, cross-sectioned along the plane C-C in

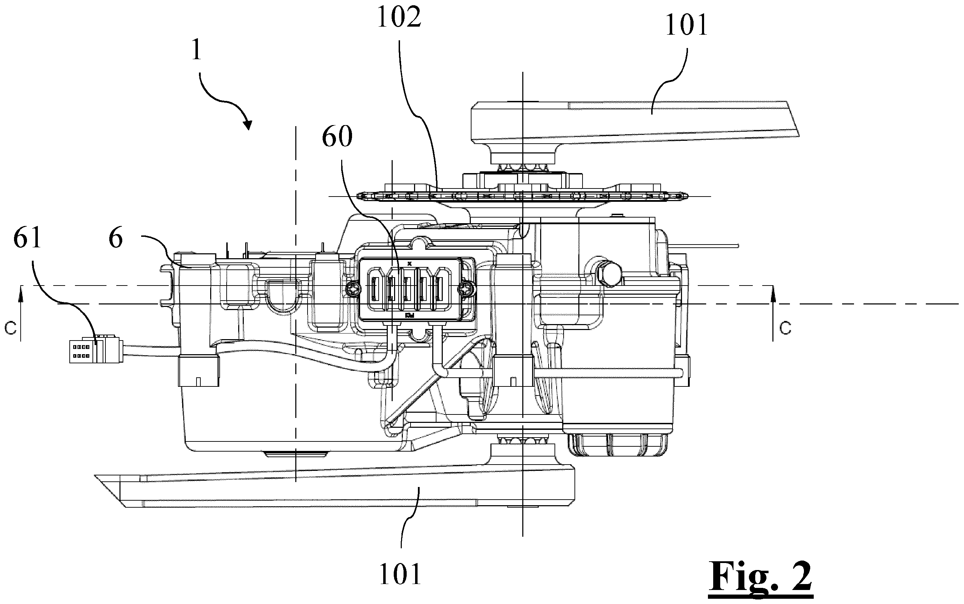

Figure 2, of the motor assembly according to the present invention;

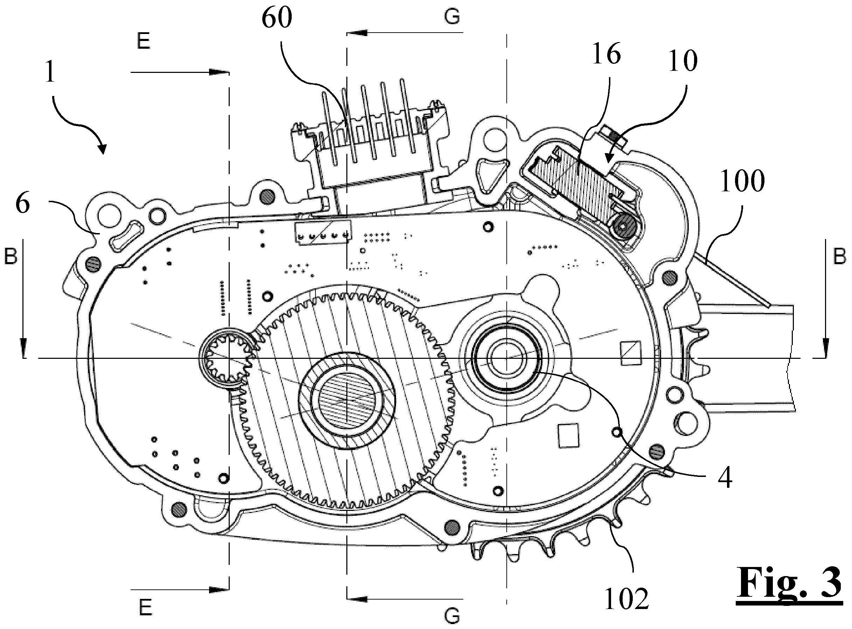

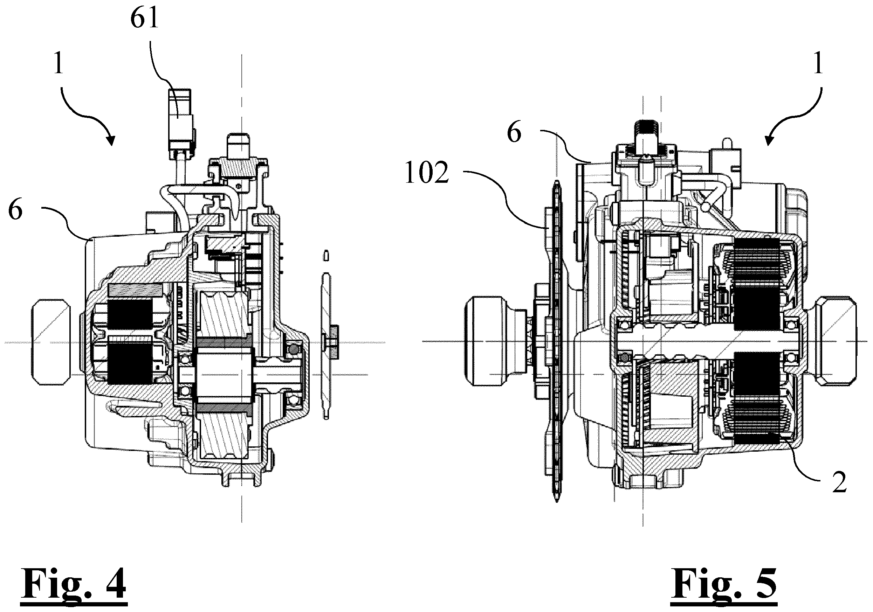

Figure 4 shows a rear view of the motor assembly cross-sectioned along the plane G-G of Figure 3;
Figure 5 shows a front view of the motor assembly cross-sectioned along the plane E-E of Figure 3;

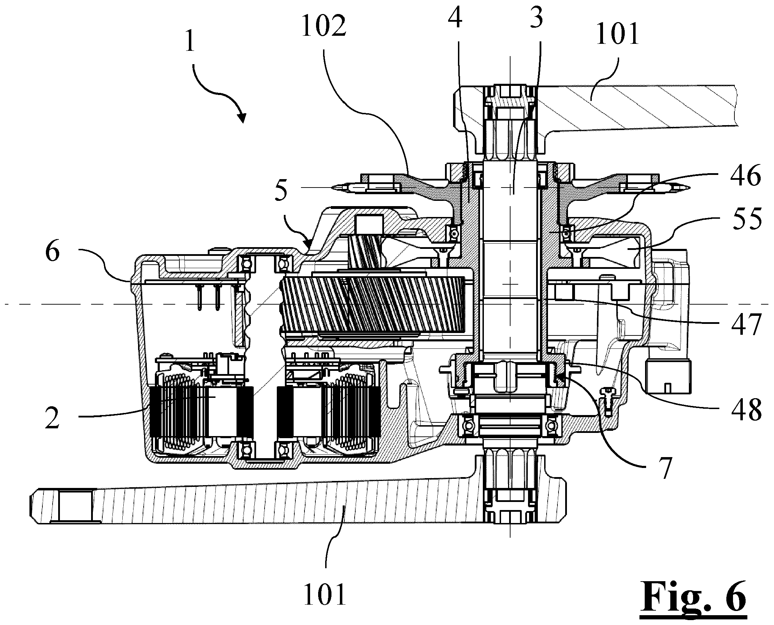

Figure 6 shows a view, from above, of the motor assembly cross-sectioned along the plane B-B of Figure 3;

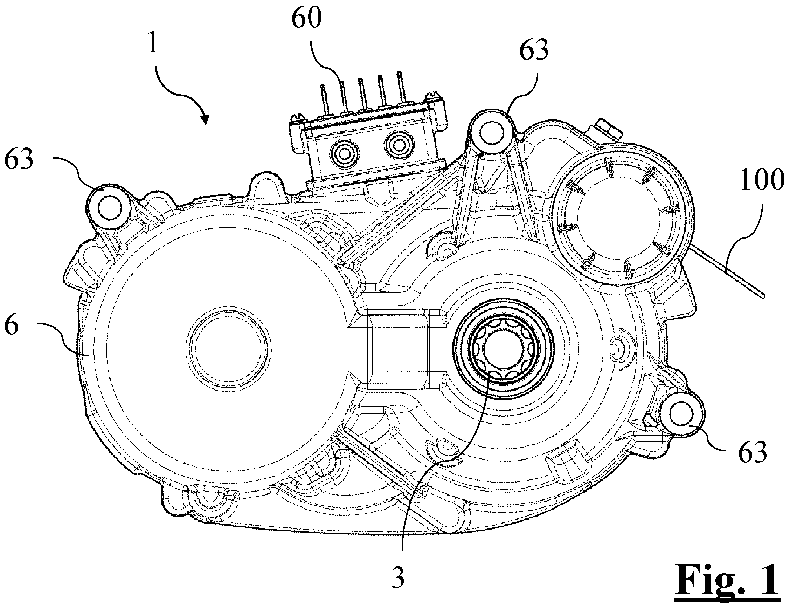

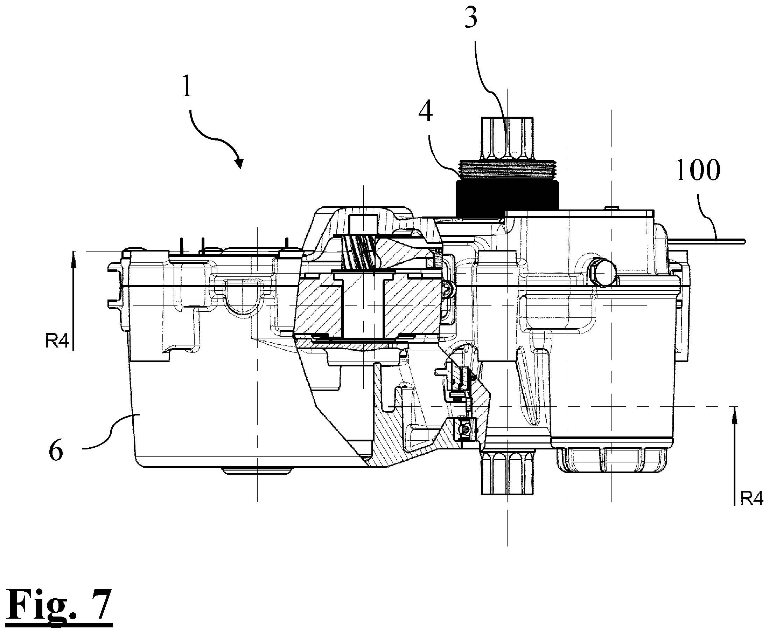

Figure 7 shows a partially cross-sectioned view, from above, of the motor assembly according to Figure 1;

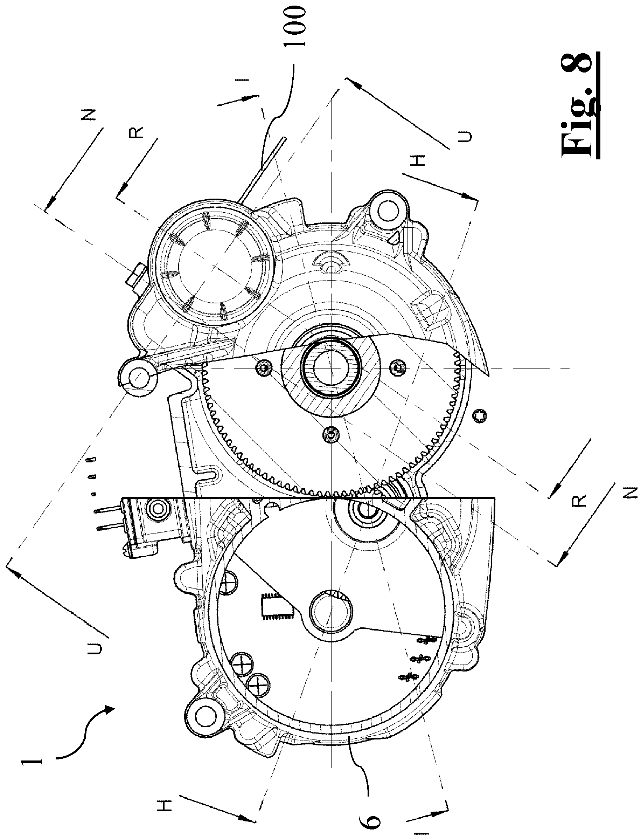

Figure 8 shows a side view of the motor assembly cross-sectioned along the split plane R4-R4 of Figure 7;

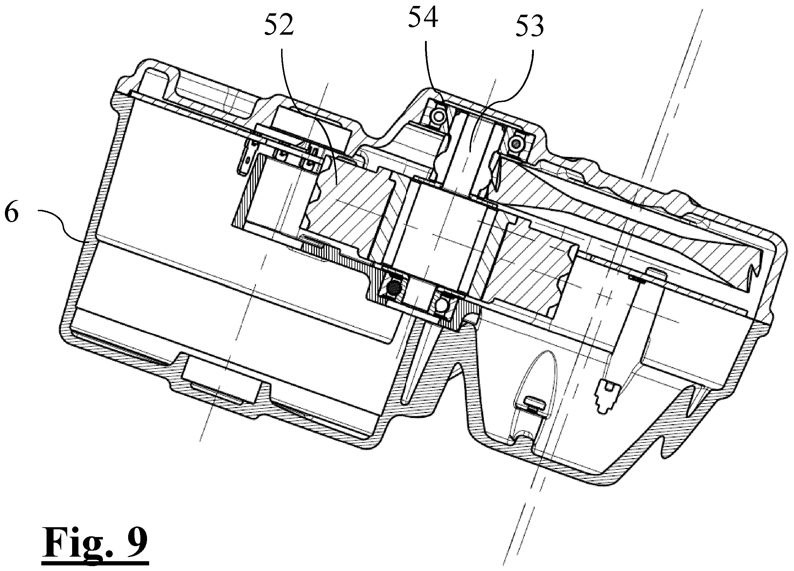

Figure 9 shows a side view, cross-sectioned along the plane H-H in
Figure 8, of the motor assembly according to the present invention;

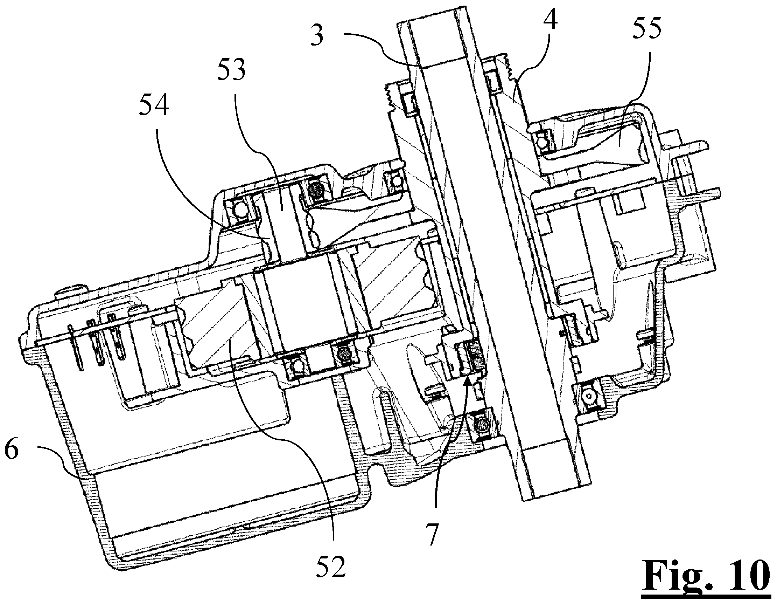

Figure 10 shows a view of the motor assembly cross-sectioned along the plane I-I of Figure 8;

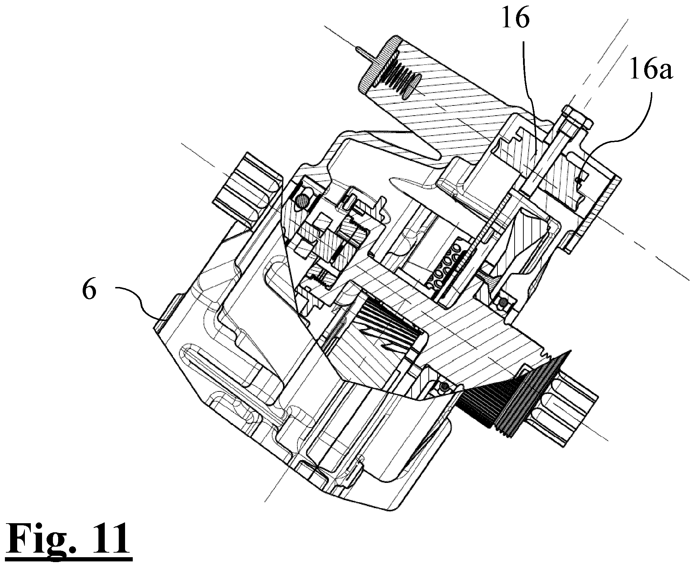

Figure 11 shows a view of the motor assembly cross-sectioned along the plane N-N of Figure 8;

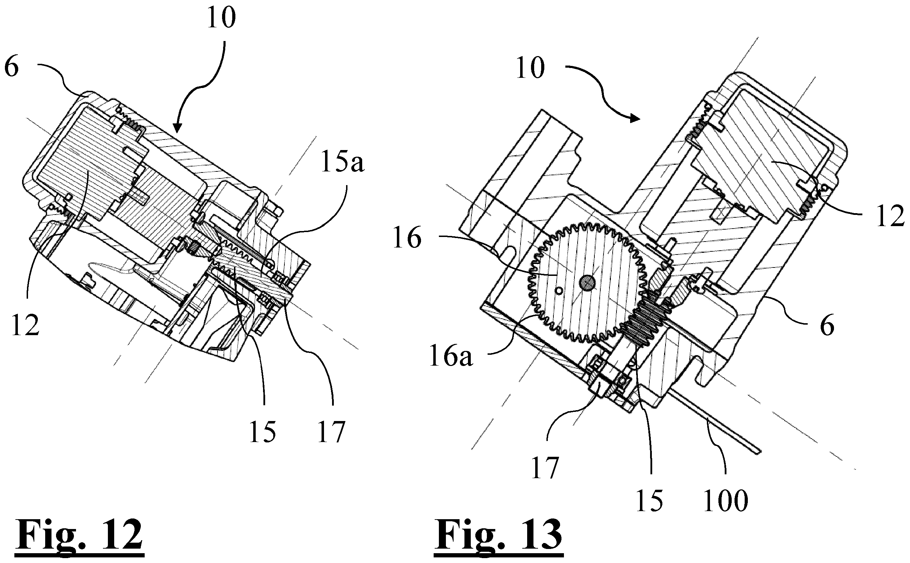

Figure 12 shows a view of the motor assembly cross-sectioned along the plane R-R of Figure 8;
Figure 13 shows a view of the motor assembly cross-sectioned along the plane U-U of Figure 8;

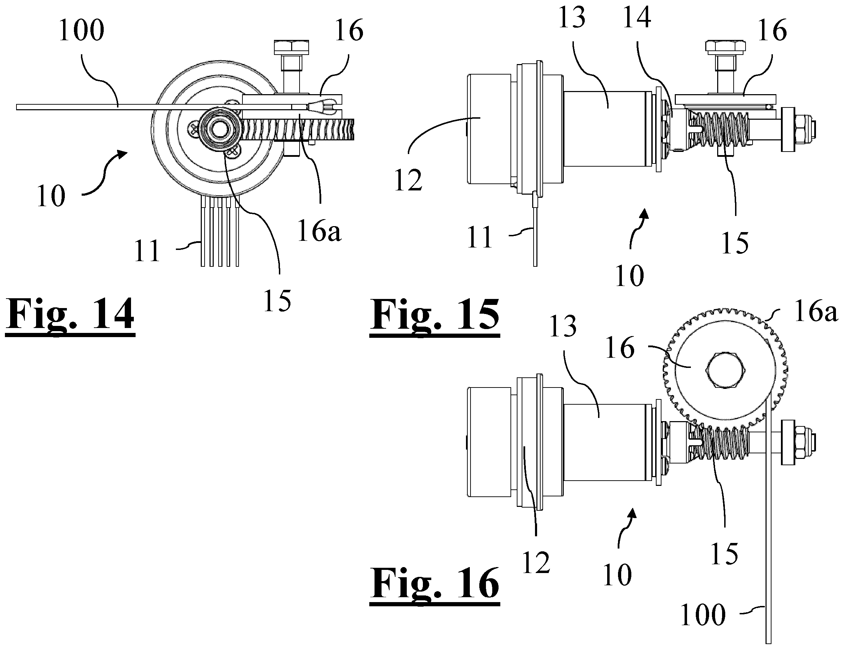

Figures 14-16 show three orthogonal views of the gear change actuator included in the motor assembly;

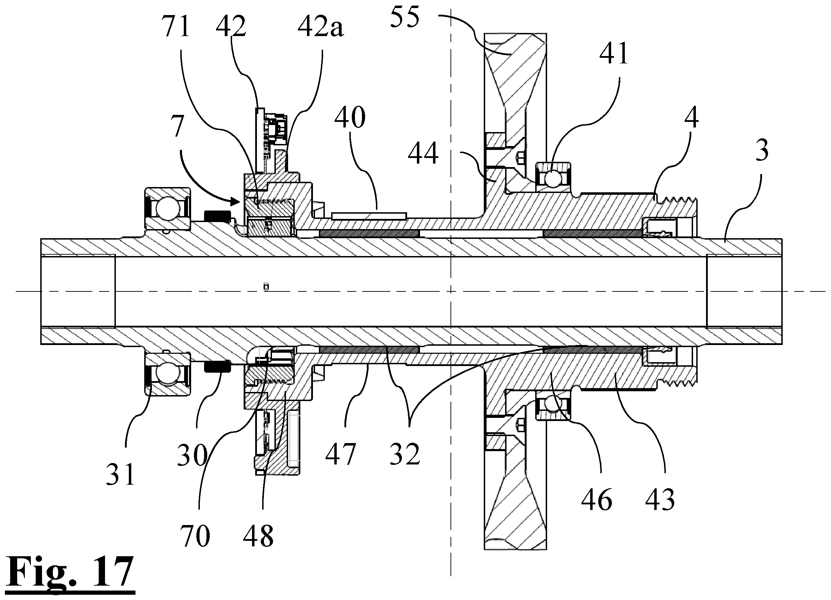

Figure 17 shows a front view of the pedal shaft and the drive shaft associated with it, having the functions of a torque meter.

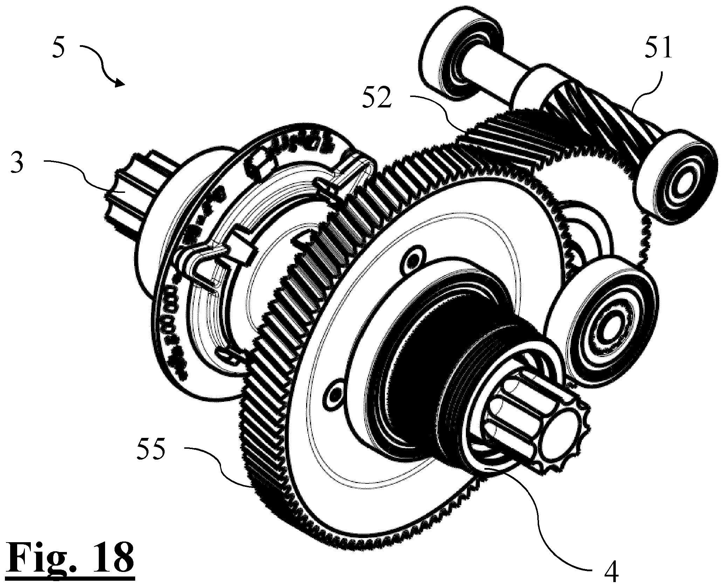

Figure 18 shows a perspective view of only the components of the transmission included in the motor assembly;

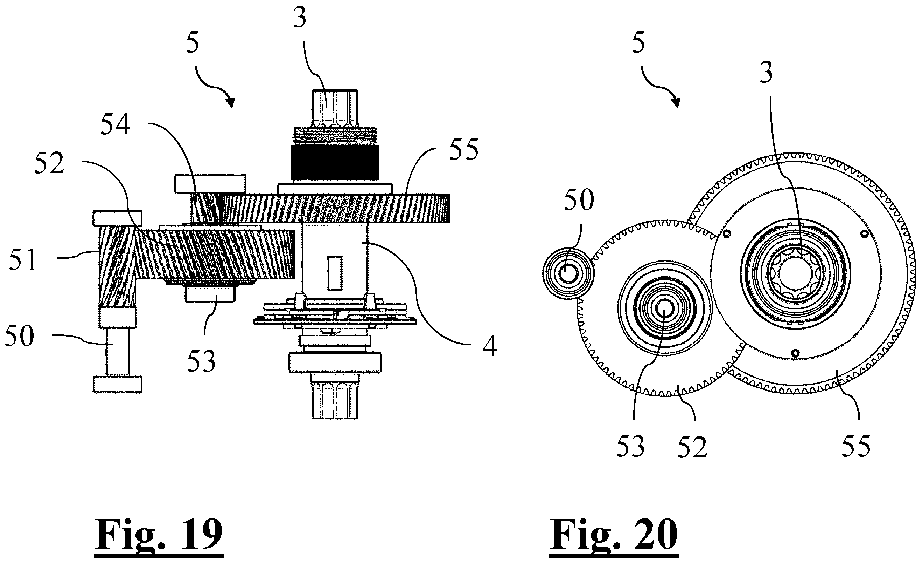

Figures 19-20 show two orthogonal views of the transmission according to Figure 18;

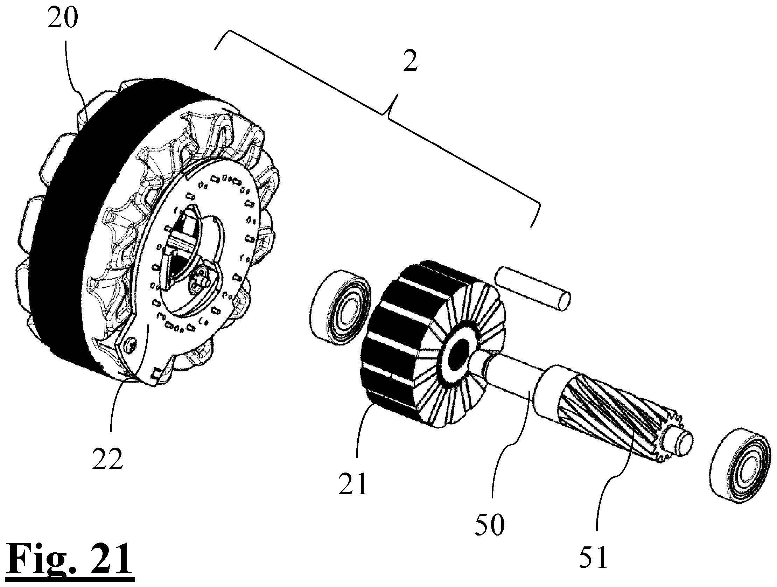

Figure 21 shows a view, with parts exploded, of the motor and drive pinion included in the motor assembly;

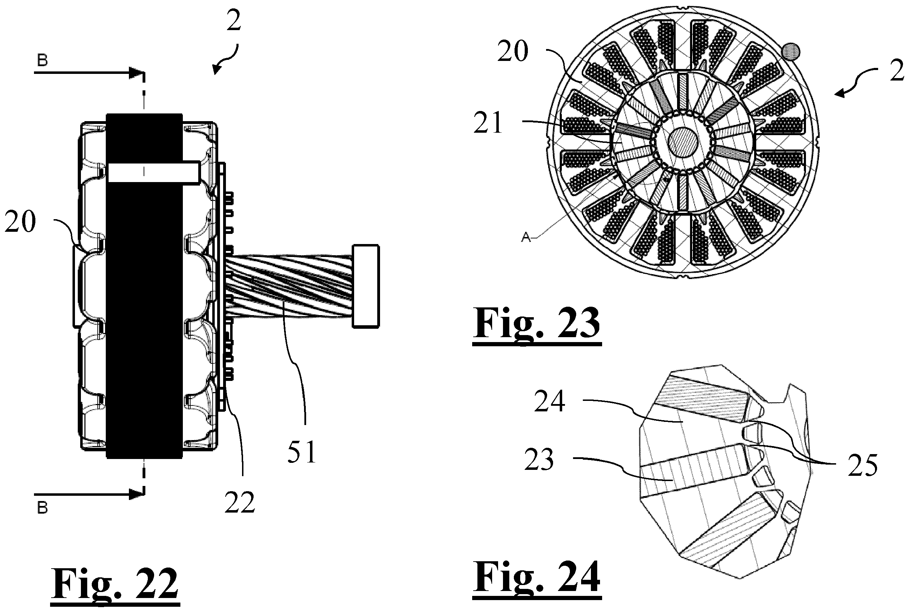

Figure 22 shows a side view of the motor and the drive pinion according to Figure 21;
Figure 23 shows a side view of the motor cross-sectioned along the plane B-B of Figure 22;
Figure 24 shows a detail A of the view shown in Figure 23.

### Detailed description

With reference to the attached figures, 1 is used to denote generically a motor assembly, in particular a crank drive motor assembly, designed to be incorporated in an electric bicycle, in particular of the pedal-assisted type.

The position references used in the present description, comprising indications such as front or rear, in front of or behind, upper or lower, above or below, or similar references, in all cases refer to the illustrative configuration shown in Figure 1 and are not to be regarded as having a limiting meaning in any way.

In particular, it should be pointed out that the aforementioned motor assembly 1 may be, during use, varyingly inclined depending on the form of the bicycle frame with which it is associated.

The motor assembly 1, as mentioned in the section relating to the area of application, is of the crank drive motor type, namely is designed to be mounted in a position below the centre of gravity in place of the conventional bottom bracket of the bicycle.

It has in fact a containment case 6 which is provided with mounts 63 for performing mounting on a bicycle frame and has, projecting transversely therefrom, the opposite ends of a pedal shaft 3 which corresponds in terms of function to the spindle of the conventional bottom brackets, these opposite ends being designed so that the pedal cranks 101 may be fixed on them.

It will be noted that the crankset, differently from that which occurs in the case of conventional bicycles, is not formed as one piece: in fact the front sprocket 102 is separate from the respective pedal crank 101 and mounted on an associated drive shaft 4 which is formed as a sleeve coaxial with and partially mounted over the pedal shaft 3.

The case 6 contains internally a main electric motor 2, a gear transmission 5 which connects kinematically the rotor 21 of said main electric motor 2 to the drive shaft 4, a gear change actuator 10 as well as the electronic boards and the electrical connections necessary for operation of the assembly.

The main electric motor 2, shown separately in Figures 21 to 24, comprises an external stator 20 integral with the case 6 and an internal rotor 21 keyed onto a first shaft 50 provided, at its free end, with a helical toothing which defines a first pinion 51 of the transmission 5. A control board 22 for the rotor position, having the function of interconnecting the phases of the motor, is associated with the stator 20.

The main electric motor 2 is of the synchronous type, where the rotor comprises radially extending permanent magnets 23 embedded in a stack of ferromagnetic laminations 24. The external portion of the rotor, which includes the permanent magnets 23, is connected to an internal portion of laminations alone by means of bridge-pieces 25 which structurally support the external portion. The small thickness of said bridge-pieces, within the technological limits of shearing, is able to ensure, in addition to the structural function, magnetic isolation of the adjacent poles so as to guide the greatest possible magnetic flow towards the stator, improving the efficiency of the machine.

Each portion of the lamination stack 24 arranged, along the external portion, between two permanent magnets 23 is connected to the internal portion by means of two bridge-pieces 25, preferably arranged to form an externally tapering isosceles trapezium.

The transmission 5, shown separately in Figures 18-20, has two gear stages, which are both helical.

In the first gear stage, the aforementioned first pinion 51 meshes with a first gear 52 keyed onto a second shaft 53; in the second gear stage, a second pinion 54 formed on the second shaft 53 meshes with a second gear 55 integral with the aforementioned drive shaft 4.

The centre-to-centre segments are conveniently inclined to form a nonplanar angle and thus limit the overall volume of the transmission 5.

With particular reference to Figure 17, we shall now describe the drive shaft 4, which performs the function of a torsiometer, and its relationship with the pedal shaft 3.

As previously mentioned, the drive shaft 4 is mounted over and coaxial with the pedal shaft 3 to which it is connected by means of a freewheel 7.

The freewheel 7 is composed of a machined profile 70 on the pedal shaft, inside which the pawls pushed outwards by resilient means and by a backing ring nut 71 screwed inside a corresponding front seat at the end of the drive shaft 4 are arranged. The backing ring nut 71 defines internally the series of teeth or recesses for unidirectional locking of the pawls.

It should be noted that the drive shaft has three cylindrical portions arranged in succession: a first portion 46, with a relatively thick wall, an intermediate portion 47, with a thinner wall, and finally a third portion 48, which is thicker than the intermediate portion for defining the seat which houses the backing ring nut 71.

If the pedal shaft 3 passes transversely through the case 6 emerging from both the sides of the latter, the drive shaft 4 extends partially outside the case 6 only with part of the first portion 46, where it has a splined surface 43 onto which the front sprocket 102 is fixed by means of a ring nut.

The assembly formed by the pedal shaft 3 and by the drive shaft 4 is thus supported on the case by a first bearing 31 positioned on the pedal shaft 3 against a respective shoulder and by a second bearing 41 positioned instead on the drive shaft 4 in an internal position with respect to the splined surface 43.

Two friction bushes 32 are instead positioned between the pedal shaft 3 and the drive shaft 4, respectively underneath the first portion 46 and the second portion 47. The friction bushes appear to be suitable since the relative rotation of the two elements occurs at low speed and substantially without any stress.

The drive shaft 4 also has, at the innermost end of the first portion 46, a quatrefoil flange 44 for fixing, by means of four screws, the second gear 55. The second bearing 41 rests conveniently against the stop surface defined by the said second gear 55.

It should be noted that, since the second gear 55 and the backing ring nut 71 are both mounted on the drive shaft 4, the latter does not require particular mechanical strength characteristics and need not be heat-treated, thus allowing easy machining of the part.

Both the front gear 102 and the second gear 55, namely the points for transmission to the shaft of the resistance torque and the driving torque supplied by the motor, are therefore fixed on top of the first portion 46. The freewheel 7 which transmits the driving torque due to the action of the user on the pedals is instead located at the opposite end of the drive shaft, on the third portion 48.

Thus the torsional deformations of the second portion 47, which is situated in between the other two portions and conveniently made with a thin wall, may be measured in order to obtain an indication of the torque when it is applied by the cyclist and which is then used in a manner known per se in the control logic of the motor.

The torsional deformation is in particular measured by means of two strain gauges 40 applied to the second portion 47 and connected to a mobile electronic board 42 supported circumferentially, by means of a board holder 42a provided with three timing and centring pins, above the third portion 48.

Opposite the mobile electronic board 42 a corresponding receiving electronic board is provided, not visible in the attached figures, said board being mounted fixed with respect to the case 6 supporting it.

An encoder wheel 30, integral with the pedal shaft portion 3 situated between the first bearing 31 and the freewheel 7, is provided underneath the receiving electronic board and aligned therewith. In the preferred embodiment described here the encoder wheel is of the magnetic type, namely it is a multipolar magnet with n north-south pole pairs in sequence, the polarity of which may be detected by suitable sensors. With this encoder wheel 30, therefore, by means of Hall effect sensors or TMR sensors mounted on the receiving electronic board, rotation of the pedals may be detected, this being a necessary condition for starting the motor in pedal-assisted bicycles.

Alternatively, it is possible to use encoder wheels of another type with suitable sensors: it is possible in particular to use encoder wheels formed by a plurality of teeth, the presence or absence of which may be detected for example by inductive or optical proximity sensors.

With particular reference to Figures 12-16, we shall now describe the gear change actuator 10.

The gear change actuator 10 comprises an auxiliary electric motor 12 connected to signal and power supply cables 11 which, as discussed below, are connected to interfaces outside the case 6.

The auxiliary electric motor 12 is connected at the front to a reduction gear unit 13, the output of which is coaxial with the output of the motor. The end of a rotatable shaft 15a, which has a worm screw 15 in a first position thereof adjacent to the reducer 13, is coupled to the output of the reduction gear 13 by means of a jaw clutch 14. The axis of the rotatable shaft 15a is parallel to that of the pedal shaft 3 and the drive shaft 4, namely transverse to the case 6.

The worm screw 15 therefore meshes with a toothed portion 16a of a winding pulley 16 mounted rotatably with respect to the case 6 between two parallel walls which support the revolving pin thereof. A control cable 100 which emerges from a suitable opening in the case 6 is wound around the winding pulley 16 so as to operate a rear derailleur of the bicycle.

The action of the auxiliary electric motor 12 therefore causes in one direction winding and subsequent pulling of the control cable 100 and in the other direction unwinding and consequent release thereof.

The rotatable shaft 15a which supports the worm screw 15 has a free end projecting outside the case 6 and profiled such that it can be engaged with a rotating and tightening tool such as a spanner or an Allen key, so that a release point 17 of the device may be defined.

By operating the release point 17 with the tool it is in fact possible to rotate the rotatable shaft 15a and perform a gear change even if there is no electric power supply or in the event of malfunctioning of the auxiliary electric motor 12. With this emergency procedure an easy gear may be selected in the event of a malfunction of the motor assembly 1 or a power failure, so as to allow one to get back easily even without the aid of the motor.

The motor assembly 1 described above is connected to a battery pack by means of a power supply jack 60 provided at the top of the case 6.

A signal connection device 61, in the form of a connector at the end of a cable emerging from the case 6, is also provided and is designed to be connected to a main control unit which is positioned preferably on the handlebars of the bicycle and provided with a control interface for the cyclist. The pedalling speed and torque signals detected inside the motor assembly 1 are sent to this main control unit, while this main control unit emits the gear and gear-changing signals which operate respectively the main electric motor 2 and the auxiliary electric motor 12.

Obviously, the person skilled in the art may make numerous modifications and variations to the method and device described above, all of which moreover are contained in the scope of protection of the invention, as defined by the following claims.

## Claims

1. Motor assembly (1) for an electric bicycle, comprising: a containment case (6); a pedal shaft (3), rotatable with respect to the case (6) and arranged to bear at the two opposed ends as many bicycle pedal cranks (101); a drive shaft (4), rotatable with respect to the case (6) and arranged to integrally bear at least one bicycle front sprocket (102); a main electric motor (2) comprising a stator (20) integral with the case (6) and a rotor (21) coupled through a transmission (5) to said drive shaft (4); said drive shaft (4) being shaped as a sleeve coaxial and overlapped to said pedal shaft (3); said pedal shaft (3) being kinematically connected in rotation to said drive shaft (4) by means of an interposed freewheel (7) which makes the pedal shaft (3) integral with the drive shaft (4) in a rotation direction corresponding to the bicycle forward motion; said drive shaft (4) comprising: a first portion (46), arranged to support the front sprocket (102) and at which a most downstream member of said transmission (5) is fixed; a third portion (48), at which the freewheel (7) is positioned; and a second portion (47) acting as a torsiometer which connects the first portion (46) and the third portion (48);
wherein the first portion (46), the second portion (47) and the third portion (48) of the drive shaft (4) are made in a single piece; **characterised by** that
at least one strain gauge (40) is placed on said second portion (48) and wherein
on the drive shaft (4), at said third portion (48), a backing ring nut (71) of the freewheel (7) is applied.

2. Motor assembly (1) according to claim 1, further comprising a mobile electronic board (42) integral with said drive shaft (4) and associated with said at least one strain gauge (40) to receive a signal indicating the torsional deformation on the second portion (47) of the drive shaft (4), said mobile electronic board (42) facing a corresponding receiving electronic board integral with the case (6) and arranged to acquire from said mobile electronic board (42) the signal indicating the torsional deformation on the second portion (47).

3. Motor assembly (1) according to claim 1, wherein the second portion (47) has a cylindrical tubular shape, with a wall having a lower thickness than that of the first portion (46).

4. Motor assembly (1) according to one of claims 1 or 3, wherein the most downstream member of the transmission is a second gear (55), said second gear being applied on the drive shaft (4).

5. Motor assembly (1) according to claim 2, wherein the pedal shaft (3) integrally supports an encoder wheel (30), said receiving electronic board comprising sensors adapted to detect a position of the encoder wheel (30) to acquire a signal indicating the rotational speed of the pedal shaft (3).

6. Motor assembly (1) according to claim 5, wherein said mobile electronic board (42) is located at an end of the drive shaft (4) within the case (6), said receiving electronic board being positioned in axial alignment with the encoder wheel (30).

7. Motor assembly (1) according to claim 6, wherein said encoder wheel (30) is a magnetic encoder wheel, said sensors of the receiving electronic board being Hall effect sensors or TMR sensors.

8. Electric bicycle comprising a motor assembly (1) according to one of the preceding claims.

## Patentansprüche

1. Motoranordnung (1) für ein elektrisches Fahrrad, umfassend: ein Aufnahmegehäuse (6); eine Pedalwelle (3), die in Bezug auf das Gehäuse (6) drehbar und so angeordnet ist, dass sie an den beiden gegenüberliegenden Enden ebenso viele Fahrradpedalkurbeln (101) trägt; eine Antriebswelle (4), die in Bezug auf das Gehäuse (6) drehbar und so angeordnet ist, dass sie einstückig mindestens ein vorderes Fahrrad-Kettenrad (102) trägt; einen Hauptelektromotor (2), der einen mit dem Gehäuse (6) einstückigen Stator (20) und einen über ein Getriebe (5) mit der Antriebswelle (4) gekoppelten Rotor (21) umfasst; wobei die Antriebswelle (4) als eine zur Pedalwelle (3) koaxiale und überlappende Hülse geformt ist; wobei die Pedalwelle (3) mittels eines zwischengeschalteten Freilaufs (7), der die Pedalwelle (3) in einer der Vorwärtsbewegung des Fahrrads entsprechenden Drehrichtung einstückig mit der Antriebswelle (4) macht, kinematisch in Drehung mit der Antriebswelle (4) verbunden ist; wobei die Antriebswelle (4) umfasst: einen ersten Abschnitt (46), der so angeordnet ist, dass er das vordere Kettenrad (102) abstützt, und an dem ein am weitesten stromabwärts gelegenes Element des Getriebes (5) befestigt ist; einen dritten Abschnitt (48), an dem der Freilauf (7) positioniert ist; und einen zweiten Abschnitt (47), der als ein Torsiometer wirkt, das den ersten Abschnitt (46) mit dem dritten Abschnitt (48) verbindet; wobei der erste Abschnitt (46), der zweite Abschnitt (47) und der dritte Abschnitt (48) der Antriebswelle (4) aus einem einzigen Stück hergestellt sind; **dadurch gekennzeichnet, dass** mindestens ein Dehnungsmessstreifen (40) auf dem zweiten Abschnitt (48) angeordnet ist und wobei auf der Antriebswelle (4) am dritten Abschnitt (48) eine Stützringmutter (71) des Freilaufs (7) angeordnet ist.

2. Motoranordnung (1) nach Anspruch 1, weiter umfassend eine mobile elektronische Platine (42), die mit der Antriebswelle (4) einstückig ist und mit dem mindestens einen Dehnungsmessstreifen (40) verbunden ist, um ein Signal zu empfangen, das die Torsionsverformung an dem zweiten Abschnitt (47) der Antriebswelle (4) anzeigt, wobei die mobile elektronische Platine (42) einer entsprechenden elektronischen Empfangsplatine gegenüberliegt, die mit dem Gehäuse (6) einstückig und so angeordnet ist, dass sie von der mobilen elektronischen Platine (42) das Signal erfasst, das die Torsionsverformung am zweiten Abschnitt (47) anzeigt.

3. Motoranordnung (1) nach Anspruch 1, wobei der zweite Abschnitt (47) eine zylindrische, rohrförmige Form aufweist, mit einer Wand, die eine geringere Dicke als die des ersten Abschnitts (46) hat.

4. Motoranordnung (1) nach einem der Ansprüche 1 oder 3, wobei das am weitesten stromabwärts gelegene Element des Getriebes ein zweites Zahnrad (55) ist, wobei das zweite Zahnrad auf der Antriebswelle (4) angebracht ist.

5. Motoranordnung (1) nach Anspruch 2, wobei die Pedalwelle (3) integral ein Kodierrad (30) abstützt, wobei die empfangende elektronische Platine Sensoren umfasst, die geeignet sind, eine Position des Kodierrads (30) zu ermitteln, um ein Signal zu erfassen, das die Drehzahl der Pedalwelle (3) anzeigt.

6. Motoranordnung (1) nach Anspruch 5, wobei die mobile elektronische Platine (42) an einem Ende der Antriebswelle (4) innerhalb des Gehäuses (6) angeordnet ist, wobei die empfangende elektronische Platine in der axialen Ausrichtung mit dem Kodierrad (30) positioniert ist.

7. Motoranordnung (1) nach Anspruch 6, wobei das Kodierrad (30) ein magnetisches Kodierrad ist und die Sensoren der empfangenden elektronischen Platine Hall-Effekt-Sensoren oder TMR-Sensoren sind.

8. Elektrisches Fahrrad umfassend eine Motoranordnung (1) nach einem der vorhergehenden Ansprüche.

## Revendications

1. Ensemble moteur (1) pour une bicyclette électrique, comprenant : un carter de confinement (6) ; un axe de pédalier (3) pouvant tourner par rapport au carter (6) et agencé pour supporter aux deux extrémités opposées autant de manivelles de pédale de bicyclette (101) ; un arbre d'entraînement (4) pouvant tourner par rapport au carter (6) et agencé pour supporter intégralement au moins un plateau avant de bicyclette (102) ; un moteur électrique principal (2) comprenant un stator (20) solidaire du carter (6) et un rotor (21) couplé par une transmission (5) à l'arbre d'entraînement (4) ; ledit arbre d'entraînement (4) ayant la forme d'un manchon coaxial et chevauchant ledit axe de pédalier (3) ; ledit axe de pédalier (3) étant cinématiquement relié en rotation audit arbre d'entraînement (4) au moyen d'une roue libre (7) interposée qui solidarise l'axe de pédalier (3) à l'arbre d'entraînement (4) dans une direction de rotation correspondant au mouvement vers l'avant de la bicyclette ; ledit arbre d'entraînement (4) comprenant : une première partie (46) agencée pour supporter le plateau avant (102) et à laquelle est fixé un élément le plus en aval de ladite transmission (5) ; une troisième partie (48) sur laquelle est positionnée la roue libre (7) ; et une deuxième partie (47) agissant comme un torsiomètre qui relie la première partie (46) et la troisième partie (48) ; la première partie (46), la deuxième partie (47) et la troisième partie (48) de l'arbre d'entraînement (4) étant réalisées d'une seule pièce ; **caractérisé en ce qu'**au moins une jauge de contrainte (40) est placée sur ladite deuxième partie (48) et un écrou d'appui (71) de la roue libre (7) est appliqué sur l'arbre d'entraînement (4), au niveau de ladite troisième partie (48).

2. Ensemble moteur (1) selon la revendication 1, comprenant en outre une carte électronique mobile (42) solidaire dudit arbre d'entraînement (4) et associée à ladite au moins une jauge de contrainte (40) pour recevoir un signal indiquant la déformation en torsion sur la deuxième partie (47) de l'arbre d'entraînement (4), ladite carte électronique mobile (42) faisant face à une carte électronique réceptrice correspondante solidaire du carter (6) et agencée pour acquérir à partir de ladite carte électronique mobile (42) le signal indiquant la déformation en torsion sur la deuxième partie (47).

3. Ensemble moteur (1) selon la revendication 1, dans lequel la deuxième partie (47) a une forme tubulaire cylindrique, avec une paroi ayant une épaisseur inférieure à celle de la première partie (46).

4. Ensemble moteur (1) selon l'une des revendications 1 ou 3, dans lequel l'élément le plus en aval de la transmission est un deuxième engrenage (55), ledit deuxième engrenage étant appliqué sur l'arbre d'entraînement (4).

5. Ensemble moteur (1) selon la revendication 2, dans lequel l'axe de pédalier (3) supporte intégralement une roue codeuse (30), ladite carte électronique réceptrice comprenant des capteurs adaptés pour détecter une position de la roue codeuse (30) en vue d'acquérir un signal indiquant la vitesse de rotation de l'axe de pédalier (3).

6. Ensemble moteur (1) selon la revendication 5, dans lequel ladite carte électronique mobile (42) est située à une extrémité de l'arbre d'entraînement (4) à l'intérieur du carter (6), ladite carte électronique réceptrice étant positionnée en alignement axial avec la roue codeuse (30).

7. Ensemble moteur (1) selon la revendication 6, dans lequel ladite roue codeuse (30) est une roue codeuse magnétique, lesdits capteurs de la carte électronique réceptrice étant des capteurs à effet Hall ou des capteurs TMR.

8. Bicyclette électrique comprenant un ensemble moteur (1) selon l'une des revendications précédentes.
